# EUROPEAN PATENT APPLICATION

(11) **EP 1 604 714 A1**
(43) Date of publication of application: **14.12.2005**
(21) Application number: 05253537.4
(22) Date of filing: 09.06.2005
(51) Int. Cl.: B01D 19/00, C10L 1/00, B01D 61/00, B01D 63/08

(54) **Method for suppressing oxidative coke formation in liquid hydrocarbons containing metal**

(30) Priority: 09.06.2004 US 864147
(71) Applicant: UNITED TECHNOLOGIES CORPORATION, Hartford, CT 06101 (US)
(72) Inventor: Spadaccini, Louis J., Manchester Connecticut 06040 (US); Huang, He, Glastonbury Connecticut 06033 (US)
(74) Representative: Leckey, David Herbert

(57) **Abstract**

A method of suppressing auto-oxidative coke formation accelerated by dissolved and/or dispersed metals within a fuel (14) includes the steps of removing dissolved oxygen (22). The dissolved oxygen is removed from the fuel (14) to substantially suppress the auto-oxidative coke formation by flowing fuel adjacent a porous membrane (50).

## Description

### BACKGROUND OF THE INVENTION

This invention relates generally to a method for suppressing thermal oxidative reactions that cause coke formation within a hydrocarbon fuel containing dissolved metals.

Typically, fuels are produced, transported, and stored in metal containers. The metal container is preferably fabricated from a metal that is inert to the specific composition of fuel stored therein. However in some instances fuel is stored in containers that contain metals that can dissolve into the fuel. For example, fuel storage and transport systems aboard ships at sea are constructed from alloys of copper and nickel. The favorable corrosion properties of brass (Cu/Zn) are ideal for the hostile salt-water environment in which the ships operate. Disadvantageously, fuel stored within the brass container absorbs trace amounts of copper. The copper is not broken down into particulates but is instead dissolved into the fuel. In some instances the copper dissolved within the fuel can reach concentration levels exceeding 50 parts per billion.

Typically, the container also includes a quantity of air that fills the space not occupied by the fuel. Oxygen from the air dissolves into the fuel. Upon heating, oxygen dissolved in the fuel is known to initiate auto-oxidative reactions that lead to the formation of insoluble carbonaceous deposits on the interior surfaces of fuel systems and engine components. The dissolved metal (e.g., copper) acts as a catalyst for the auto-oxidative reactions to initiate and accelerate fuel decomposition and increase the quantity of coke formed. Removal of the trace metal contaminants from the fuel is difficult and provides only limited reductions in trace metal content.

It is common practice to use fuel as a cooling medium for various systems onboard an aircraft. Higher engine operating temperatures increases cycle efficiency and reduces fuel consumption. However, the engine operating temperature is often limited by the usable cooling capacity of the fuel. The cooling capacity of the fuel is limited by the quantity of insoluble materials commonly referred to as coke that forms on interior surfaces of the fuel system and engine components.

It is known to remove dissolved oxygen within fuel with de-oxygenation devices and thereby increase the usable cooling capacity. Co-owned United States Patents 6,315,815 and 6,709,492 disclose devices for removing dissolved oxygen using a gas-permeable membrane. As fuel passes along the permeable membrane, oxygen molecules in the fuel diffuse out of the fuel across the gas-permeable membrane.

The usable cooling capacity of fuels containing trace amounts of metal contaminants is even more limited than fuels not containing metal contaminants. Accordingly, it is desirable to develop a method for suppressing auto-oxidative reactions in fuels containing trace amounts of metal contaminants to increase the usable cooling capacity of the fuel and minimize coke formation.

### SUMMARY OF THE INVENTION

This invention is a method of inhibiting coke formation in a fuel containing dissolved metals by removing dissolved oxygen to suppress auto-oxidative deposition.

The method includes the steps of flowing fuel containing dissolved metals through a fuel passage and suppressing auto-oxidative reactions accelerated by the dissolved metals within the fuel by removing dissolved oxygen. The dissolved oxygen is removed from the fuel to substantially suppress the auto-oxidative coke formation.

A deoxygenator removes a substantial portion of oxygen from within the fuel containing dissolved metals. Fuel emerging from the deoxygenator can flow through a heat exchanger to absorb heat generated by other systems. The removal of dissolved oxygen substantially elevates the usable cooling capacity of the fuel by suppressing formation of insoluble deposits that otherwise limit the operating temperature of the fuel.

Accordingly, the method of this invention suppresses auto-oxidative coke formation that limits the usable cooling capacity of hydrocarbon fuel containing dissolved gases and provides for the use of fuel having a concentration of metals that would otherwise accelerate and increase coke formation.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 is schematic view of a fuel storage tank;
Figure 2 is a schematic view of a fuel system and an energy conversion device;
Figure 3 is a schematic view of a permeable membrane for removing dissolved oxygen; and
Figure 4 is a graph illustrating the effects of oxygen removal on the formation of surface depositions.

### DETAILED DESCRIPTION OF THE PREFERRED EMBODIMENT

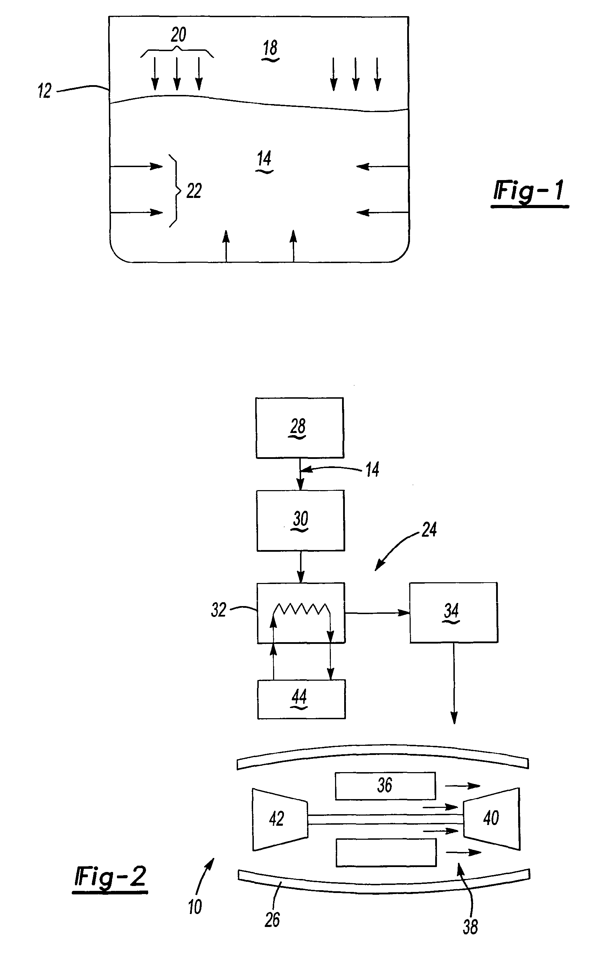

Referring to Figure 1, fuel 14 is produced, transported and stored in metal containers such as is schematically shown at 12. The metal container 12 is preferably fabricated from a metal that is inert to the specific composition of fuel 14 stored therein. However in some instances fuel 14 must be stored in containers 12 that contain metals that can dissolve into the fuel 14. Fuel 14 stored aboard ships at sea is stored in containers fabricated from brass. The favorable corrosion properties of brass are ideal for the hostile salt-water environment in which the ships operate. However, fuel 14 stored within a container 12 fabricated from brass absorbs trace amounts of metal 22.

Typically, the metal 22 dissolved into the fuel is copper. Although copper is discussed as an example of metal that dissolves within the fuel 14 and accelerates auto-oxidative reactions. Other metals can also dissolve and/or disperse into the fuel and accelerate auto-oxidative reactions. In some instances the copper concentration within the fuel 14 can exceed 500 parts per billion. Copper within the fuel at concentrations as low as 50 parts per billion or even lower can have a significant effect on coke formation in the fuel 14.

A method of inhibiting coke formation in a fuel 14 containing dissolved metals is disclosed. The method includes the steps of flowing the fuel 14 containing dissolved metals through a fuel passage 16 and suppressing auto-oxidative reactions accelerated by the dissolved metals within the fuel 14 by removing the dissolved oxygen. The dissolved oxygen 20 is removed from the fuel 14 to substantially suppress and delay the auto-oxidative reactions that cause the formation of insoluble deposits.

The container 12 also includes a quantity of air 18 that fills the space not occupied by the fuel 14. Oxygen 20 from the air 18 dissolves into the fuel 14. Oxygen 20 within the fuel 14 is known to initiate auto-oxidative reactions that lead to the formation of insoluble material deposits on the interior surfaces of fuel systems and engine components. The dissolved copper combines with the dissolved oxygen 20 within the fuel 14 to accelerate the formation and increase quantity of coke deposits.

Referring to Figure 2, a fuel system 24 and a gas turbine engine 26 are schematically shown. The fuel system 24 includes a fuel tank 28, a fuel deoxygenator 30, a heat exchanger 32, and a fuel-metering device 34. The fuel system 24 delivers fuel to the gas turbine engine 26. The gas turbine engine 26 includes a combustor 36, a turbine 40 and a compressor 42. The compressor 42 compresses air that is fed into the combustor 36. The combustor 36 mixes and bums the fuel and air producing exhaust gases 38. The exhaust gases 38 drive the turbine 40 that in turn drives the compressor 42. Although, a gas turbine engine 26 is shown and described, a worker skilled in the art with the benefit of this disclosure would understand that other energy conversion devices are within the contemplation of this invention.

Fuel 14 flows through the deoxygenator 30 to remove a substantial portion of oxygen 20 from within the fuel 14 containing dissolved metals. Fuel 14 emerging from the deoxygenator 30 flows through the heat exchanger 32 absorbing heat created by another onboard system 44. The use of fuels for cooling is well known by those skilled in the art. The removal of dissolved oxygen 20 substantially elevates the usable cooling capacity of the fuel 14 by suppressing auto-oxidative reactions that form insoluble deposits.

At temperatures between approximately 250F (121°C) and 800F (427°C), dissolved oxygen within the fuel 14 reacts to form coke precursors that initiate and propagate reactions that lead to coke deposit formation. The reduction in dissolved oxygen within the fuel 14 suppresses the coke producing auto-oxidative reactions.

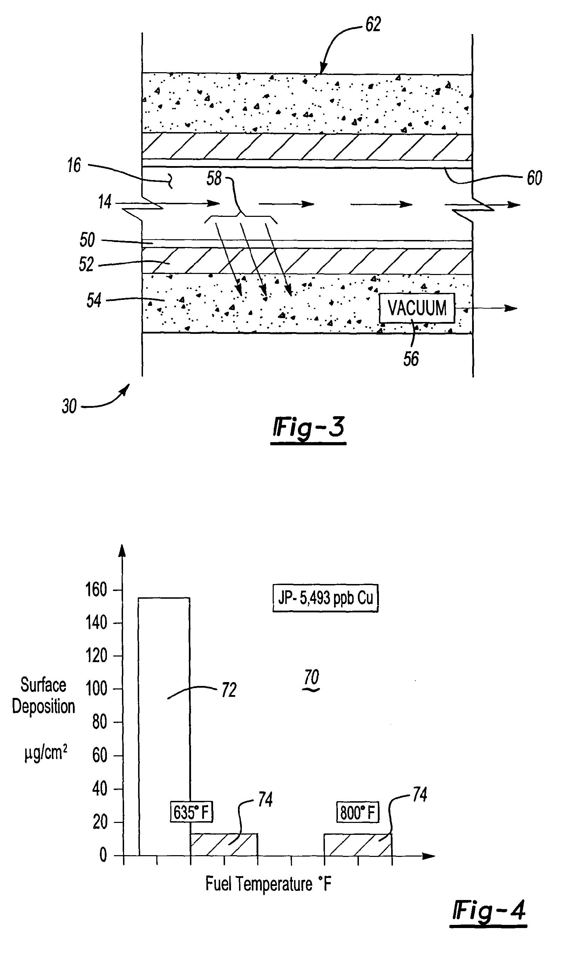

Referring to Figure 3, the fuel deoxygenator 30 includes the fuel passage 16 through which the fuel 14 flows. The fuel passage 16 comprises a permeable membrane 50 adjacent the flow of fuel 14. The permeable membrane 50 is supported on a porous backing 52. The permeable membrane 50 is preferably a 0.5-20 µm (micron) thick coating of Teflon AF 2400 over a 0.005-in (0.127 mm) thick porous backing 52 fabricated from polyvinylidene fluoride (PVDF) with a 0.25 µm (micron) pore size. The permeable membrane 50 is preferably an amorphous fluoropoly mer e.g. Dupont Teflon® AF amorphous fluoropolymer. However, other materials as are known to those skilled in the art are within the contemplation of this invention. Other supports of different material thickness and pore size can be used that provide the requisite strength and flow through capability. The porous backing 52 is in turn supported on a porous substrate 54.

A vacuum source 56 generates a partial oxygen pressure differential 58 across the permeable membrane 50, porous backing 52, and porous substrate 54. The partial pressure differential 58 drives the diffusion of dissolved oxygen 20 from a fuel side 60 of the fuel passage 16 through the permeable membrane 50 and away from the fuel 14. Oxygen 20 removed from the fuel 14 is vented out of the fuel system 24. The specific configuration of the fuel deoxygenator 30 is as disclosed in issued United States Patents 6,315,815 and 6,709,492 assigned to Applicant and that is hereby incorporated by reference. Further, a worker with the benefit of this disclosure would understand that other configurations of fuel deoxygenator are within the contemplation of this invention.

Referring to Figure 4, graph 70 illustrates the reduction in surface deposition that results from the removal of dissolved oxygen 20 from the metal-containing fuel 14. The amount of surface deposition formed with fuel 14 containing dissolved oxygen and dissolved metals is shown at 72 and dramatically increases the amount of insoluble materials that are deposited on surfaces of the fuel system 24 and engine components. The amount of surface depositions formed with fuel having metal and a reduced amount of dissolved oxygen is shown at 74. The reduction in surface deposition shown by the fuel 74 is a direct result of the removal of oxygen. The removal of oxygen prevents the initiation of auto-oxidative reactions with the trace metals disposed within the fuel. The example embodiment utilizes JP-5 jet fuel that contains 493 parts per billion of copper. The fuel 14 with both dissolved oxygen 20 and dissolved metals formed a significantly greater amount of surface depositions, than fuel 14 having a substantial portion of dissolved oxygen 20 removed.

Further, the reduction in insoluble material formation provides for the significant increase in usable cooling capacity. The amount of insoluble material deposited within the fuel system and engine components significantly limits the usable cooling capacity. As is shown in the graph 70, removal of dissolved oxygen 20 reduces the formation of insoluble products and provides for a substantial increase in fuel cooling capacity. The fuel 14 with a reduced amount of oxygen 20 shown at 74, is capable of operating at temperatures approaching and exceeding 800 F (427°C) without significant quantities of coke formation.

Accordingly, the method of this invention suppresses auto-oxidative reactions accelerated by trace metal containments within the fuel 14 to provide increased usable cooling capacity. The increased cooling capacity is provided without requiring a complex process for removing metals from the fuel 14. The method of this invention increases the usable cooling capacity that in turn provide for increased engine operating temperatures and improved performance with trace amounts of metal contaminant dissolved with the fuel 14.

The foregoing description is exemplary and not just a material specification. The invention has been described in an illustrative manner, and should be understood that the terminology used is intended to be in the nature of words of description rather than of limitation. Many modifications and variations of the present invention are possible in light of the above teachings. The preferred embodiments of this invention have been disclosed, however, one of ordinary skill in the art would recognize that certain modifications are within the scope of this invention. It is understood that within the scope of the appended claims, the invention may be practiced otherwise than as specifically described. For that reason the following claims should be studied to determine the true scope and content of this invention.

## Claims

1. A method of inhibiting coke formation in a fuel (14) containing dissolved metals (22), said method comprising the steps of:
a) flowing the fuel (14) containing dissolved metals (22) through a fuel passage (16); and
b) suppressing auto-oxidative coke formation accelerated by the dissolved metals within the fuel by removing dissolved oxygen (20).

2. The method as recited in claim 1, wherein said step a) comprises flowing the fuel (14) containing dissolved metals adjacent a permeable membrane (50).

3. The method as recited in claim 2, comprising generating a partial oxygen pressure differential across the permeable membrane (50) to diffuse oxygen from the fuel (14) containing dissolved and/or dispersed metal.

4. The method as recited in claim 3, comprising supporting the permeable membrane (50) on a porous substrate (54) and drawing diffused oxygen through the porous substrate (54) away from the fuel (14) containing dissolved and/or dispersed metals.

5. The method as recited in any preceding claim, comprising storing the fuel (14) within a container (12) comprising copper.

6. The method as recited in claim 5 wherein trace amounts of metals (22) from the container (12) dissolve into the fuel (14).

7. The method as recited in claim 6, wherein the trace amounts of metals (22) dissolved within the fuel (14) comprises between 50 and 400 parts per billion of copper.

8. The method as recited in any preceding claim, wherein said step b) comprises suppressing auto-oxidative coke formation to a temperature of the fuel greater than 250°F (121°C).

9. The method as recited in any preceding claim, wherein said step b) comprises suppressing auto-oxidative coke formation to a temperature of the fuel up to approximately 800°F (427°C).

10. A method of increasing a usable cooling capacity of a hydrocarbon fuel (14) containing dissolved metals (22), said method comprising the steps of:
a) flowing the hydrocarbon fuel (14) through a fuel passage (16);
b) suppressing formation of insoluble materials by removing dissolved oxygen (20) from the hydrocarbon fuel (14).

11. The method as recited in claim 10, wherein the hydrocarbon fuel (14) comprises more than 40 parts per billion of copper.

12. The method as recited in claim 10 or 11, wherein said step b) comprises removing oxygen (20) dissolved within the hydrocarbon fuel (14).

13. The method as recited in claim 10, 11 or 12, wherein said step a) comprises flowing the hydrocarbon fuel (14) adjacent a permeable membrane (50).

14. The method as recited in claim 13, comprising creating a partial oxygen pressure differential across the permeable membrane (50) for drawing dissolved oxygen (20) from the hydrocarbon fuel (14) across the permeable membrane (50) and away from the hydrocarbon fuel (14).
